# EUROPÄISCHE PATENTSCHRIFT

(11) **EP 0 409 973 B1**
(45) Veröffentlichungstag und Bekanntmachung des Hinweises auf die Patenterteilung: **05.01.1994**
(21) Anmeldenummer: 90903800.2
(22) Anmeldetag: 13.02.1990
(51) Int. Cl.: B23B 29/04, B23B 31/06, B23C 5/26, B23Q 3/12, F16B 17/00

(54) **KUPPLUNG ZUR LÖSBAREN FIXIERUNG VON BAUTEILEN AN ENTSPRECHENDEN TRÄGERTEILEN**
COUPLING FOR RELEASABLY FASTENING COMPONENTS PARTS TO CORRESPONDING SUPPORT PARTS
ACCOUPLEMENT POUR LA FIXATION AMOVIBLE DE PIECES SUR DES PARTIES DE SUPPORT CORRESPONDANTES

(30) Priorität: 13.02.1989 DE 3904259
(43) Veröffentlichungstag der Anmeldung: 30.01.1991
(73) Patentinhaber: GOTTLIEB GÜHRING KG, D-72458 Albstadt (DE)
(72) Erfinder: REINAUER, Josef, D-7480 Sigmaringen (DE)
(74) Vertreter: Winter, Konrad Theodor, Dipl.-Ing.
(86) Internationale Anmeldenummer: EP9000228
(87) Internationale Veröffentlichungsnummer: WO9009253

(56) Entgegenhaltungen:
- EP-A- 266 324
- EP-A- 341 227
- DE-A- 3 602 247
- DE-A- 3 715 659
- DE-A- 3 807 140
- SE-B- 459 852
- US-A- 4 045 038

## Beschreibung

Die Erfindung betrifft eine Kupplung zur lösbaren dreh- und axialfesten Fixierung von Bauteilen, insbesondere von Werkzeugkomponenten, an hierfür vorgesehenen Trägerteilen, wie z.B. an einem Werkzeugträger oder einer Werkzeug-Grundaufnahme, gemäß dem Oberbegriff des Patentanspruchs 1.

Insbesondere im Hinblick darauf, daß moderne Fertigungsanlagen zunehmend mit automatischen Werkzeugwechselsystemen ausgestattet werden, ist das Bedürfnis nach modular aufgebauten Werkzeugsystemen immer größer geworden. Bei derartigen Systemen kommt z.B. ein mit hoher Präzision gefertigter Spannschaft einer Werkzeugaufnahme zum Einsatz, an den ein System verschiedener Werkzeuge angekoppelt werden kann. An ein darauf abgestimmtes Kupplungssystem werden hohe Anforderungen hinsichtlich des Kraftflusses, der Rundlauf- und der Positionierungsgenauigkeit gestellt.

Es sind bereits verschiedene Versuche unternommen worden, ein universell einsetzbares Kupplungssystem zu schaffen, das die oben aufgezeigten Kriterien erfüllt. So ist beispielsweise vorgeschlagen worden, im Bereich der Kupplung eine selbstzentrierende Hirth-Verzahnung einzusetzen, die zusammen mit einer Spannzange für die formschlüssige Verbindung der Teile sorgen sollte. Diese Art von Kupplung ist jedoch auf die Trennstelle zu einer Werkzeug-Grundaufnahme beschränkt geblieben.

Gemäß einem weiteren Lösungsvorschlag erfolgt die Kupplung über eine zentrische Gewindeverbindung. Diese Kupplung erschwert den Einsatz von automatischen Werkzeugwechselsystemen, da zum Lösen der Kupplung ein frontaler Zugriff zu den Teilen erforderlich ist, um die Verbindung schnell lösen zu können.

Eine sehr leistungsfähige Kupplung für den Bereich der Schnittstelle zwischen Werkzeugmaschine und Werkzeugsystemmodul ist in der DE 38 07 140 A1 beschrieben. Diese Kupplung bildet dem Oberbegriff des Patentanspruches 1. Hierbei kommen Spannelemente in Form von sich über die Schnittstelle erstreckenden Spannklauen zum Einsatz, die unter Abstützung in einer Aufnahme der Maschinenspindel mit einem radial nach außen vorspringenden Klauenabschnitt in eine Ausnehmung eines Zentrierfortsatzes des anzukuppelnden Teils schwenkbar sind, wodurch eine axiale Anpreßkraft erzeugt wird. Hierbei ergibt sich eine homogene Kraftverteilung über den Umfang, wobei der von den Spannelementen beanspruchte Bauraum klein bleibt. Allerdings benötigt diese Art von Kupplung eine zentrisch in der Maschinenspindel aufgenommene Zugstange, die an ihrem der Schnittstelle zugewandten Ende einen Betätigungskonus für die Spannklauen aufweist. Als Kupplung für Bestandteile eines modular aufgebauten Werkzeugsystems eignet sich diese Kupplung deshalb nur bedingt.

Es ist zwar bereits versucht worden, Kupplungssysteme mit zentraler Spannstange und Keilgetriebe auch an Trennstellen zwischen einem Werkzeugträger und einem stehenden Werkzeug,beispielsweise einem Drehstahl, einzusetzen. Hierzu mußte allerdings ein gesondertes und raumgreifendes Getriebe vorgesehen werden, um die Spannstange , die sich senkrecht zur Trennstelle erstreckt, von außen in Axialrichtung zu betätigen. Abgesehen davon, daß durch dieses Getriebe verhältnismäßig hohe Reibungsverluste entstehen, ist ein weiterer Nachteil darin zu sehen, daß eine modulare Hintereinanderschaltung mehrerer Werkzeugkomponenten bei einheitlicher Betätigung der Spannstange nicht ermöglicht ist.

Aus der DE 37 15 659 A1 ist Schließlich noch eine Kupplung bekannt geworden, die zur lösbaren dreh- und axialfesten Fixierung von Bauteilen, insbesondere von Werkzeugkomponenten an hierfür vorgesehenen Trägerteilen, dient. Dabei ist eine am Trägerteil vorgesehene Aufnahme für einen Zentrierfortsatz des anzukuppelnden Bauteils und eine von der Außenseite des Bauteils mittels einer Stelleinrichtung betätigbare Spanneinrichtung, Vorgesehen mit der die zu kuppelnden Teile über eine Stützringflächenpaarung gegeneinander preßbar sind. Die Stelleinrichtung ist von einer in einer Axialebene des Zentrierfortsatzes liegenden Stellschraube gebildet. Die Spanneinrichtung weist eine pendelnd im Trägerteil achsmittig gelagerte Zugstange auf, die sich in eine koaxiale Ausnehmung des anzukuppelnden Bauteils erstreckt und dort einen Konusabschnitt ausbildet. Über diesen Konusabschnitt ist die Zugstange mittels einer sich am anzukuppelnden Bauteil abstützenden Stelleinrichtung unter Zug setzbar.

Diese Kupplung zeichnet sich durch eine leichte Bedienbarkeit, gute Kraftübertragung, hohe Rundlaufgenauigkeit und große Flexibilität hinsichtlich der zu kuppelnden Teile aus. Sie ist allerdings mit einer Kupplung, wie sie in der DE 38 07 140 A1 beschrieben ist , nur bedingt kompatibel.

Der Erfindung liegt deshalb die Aufgabe zugrunde, eine Kupplung gemäß dem Oberbegriff des Patentanspruchs 1 zu schaffen, die so aufgebaut ist, daß unter Beibehaltung oben angegebener Vorteile die Schnittstelle im Bereich des anzukuppelnden Bauteils so gestaltet werden kann, daß eine direkte Verbindung zum Kupplungssystem gemäß DE 38 07 140 A1 herstellbar ist.

Diese Aufgabe wird durch die im kennzeichnenden Teil des Patentanspruchs 1 angegebenen Merkmale gelöst.

Erfindungsgemäß wird eine Kupplung geschaffen, die für einen optimalen Kraftfluß zwischen den zu kuppelnden Teilen sorgt. Weil die Spannklauen nur relativ wenig Bauraum in Anspruch nehmen, kann der Flächenkontakt im Bereich der Stützringflächenpaarung sehr groß gehalten werden. Es ist auch nach wie vor dafür gesorgt, daß temperaturbedingte Schwierigkeiten beim Wechseln des Bauteils vom Grundkonzept her ausgeschlossen sind, da das ggfs. kältere Bauteil mit einem Fortsatz in die Aufnahme des Trägerteils eingreift. Die von außen zugängliche Stelleinrichtung ist aüßerst einfach ausgebildet und erleichtert den Einsatz automatischer Werkzeugwechselsysteme. Von besonderem Vorteil ist dabei, daß sich die auftretenden Zerspanungskräfte am Werkzeug nicht negativ auf die Lösbarkeit der Verbindung auswirken. Der zwischen den Spannklauen verbleibende Raum kann in vorteilhafter Weise zur Unterbringung einer Dreh-Mitnehmereinrichtung herangezogen werden. Im Bereich des anzukuppelnden Bauteils ist lediglich ein radialer Durchbruch für den Zugang zur Stellschraube und eine hinterschnittene Innenausnehmung, vorzugsweise in Form einer Hinterdrehung, erforderlich. Diese Innenausnehmung kann so gestaltet werden, daß die Spannklauen des mit einer zentralen Zugstange arbeitenden Kupplungssystems gemäß DE 38 07 140 A1 unmittelbar eingreifen können, wodurch sich ein einheitliches Kupplungskonzept für beliebige Bauteil-Systeme, insbesondere Werkzeugsysteme ergibt.

Vorteilhafte Weiterbildungen sind Gegenstand der Unteransprüche.

Mit der Weiterbildung gemäß Unteranspruch 3 ergibt sich eine einfache Justierung der Kontaktabschnitte.

Die Wahl der Kontaktflächenpaarung zwischen Ankerabschnitt und Stütznut gemäß Unteranspruch 10 eröffnet die Möglichkeit,die axiale Zugkraft möglichst querkraftfrei zu übertragen, und zwar selbst dann, wenn eine toleranzbedingte Exzentrizität der Kontaktflächen zwischen Spannklauen und Bauteil vorliegen sollte.

Eine besonders raumsparende Anordnung ergibt sich mit dem Merkmalen des Patentanspruchs 13, da dem Führungskörper eine Doppelfunktion übertragen wird.

Nachstehend wird die Erfindung anhand schematischer Zeichnungen näher erläutert. Es zeigen:
Fig.1 einen schematischen Axialschnitt der Kupplung;
Fig.2 eine Einzelheit der Kupplung zur Verdeutlichung des Bewegungsablaufs der Spannklauen;
Fig.3 eine perspektivische Ansicht der Kupplung gem. Fig.1;
Fig.4 eine schematische Stirnansicht der Kupplung;und
Fig.5 eine Explosionsansicht der in der Aufnahme festgelegten Kupplungskomponenten.

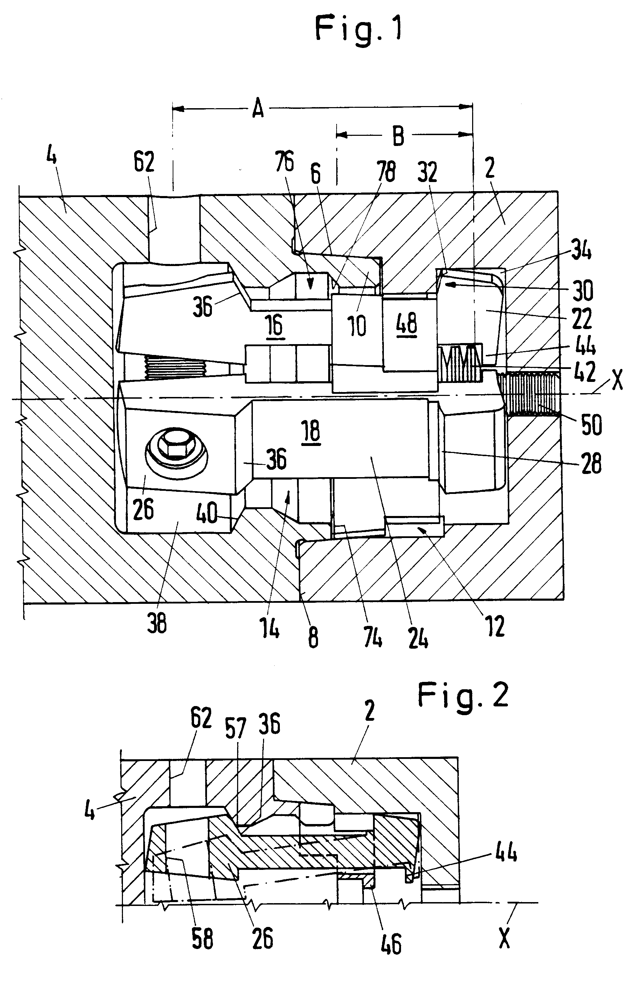

In Fig.1 ist mit dem Bezugszeichen 2 ein Trägerteil und mit dem Bezugszeichen 4 ein daran anzukuppelndes Bauteil bezeichnet. Das Bauteil kann beispielsweise ein stehendes oder drehendes Werkzeug sein, oder eine Schaftverlängerung für ein modular aufgebautes Werkzeugsystem. Das Trägerteil 2 kann z.B. eine Werkzeug- Grundaufnahme, ein Werkzeug-Revolver oder ein anderes Trägerteil eines Werkzeug- oder Werkzeug-Handhabungssystems sein. Das Trägerteil 2 kann schließlich auch Bestandteil anderer Handhabungseinrichtungen sein.

Die Kupplung der beiden Teile 2 und 4 erfolgt über eine Schnittstellen-Passung in Form eines Zentrierkonus 6 und einer Stützring-Flächenpaarung 8. Zu diesem Zweck hat das Bauteil 4 einen Zentrierfortsatz 10, der in eine entsprechend gestaltete Aufnahme 12 des Tragerteils 2 eingreift. Auch auf seiten des Bauteils 4 ist eine Innenausnehmung 14 vorgesehen, die nachfolgend näher beschrieben werden soll.

Über die Schnitt- bzw. Trennstelle der beiden Bauteile hinweg erstrecken sich drei, um jeweils 120 Grad winkelversetzt angeordnete Spannklauen 16, 18 und 20, die jeweils in einer Axialebene liegend angeordnet und in dieser Ebene verschwenkbar sind. Jede Spannklaue hat i.W. drei Abschnitte: einen Ankerabschnitt 22, einen Mittelabschnitt 24 und einen Klauenabschnitt 26. Der Ankerabschnitt 22 stützt sich mit einer balligen Kontaktfläche 28 an einer Flanke 32 einer Schulter 30 der Aufnahme 12 ab. Der sich an die Schulter 30 anschließende Raum 34 ist groß genug bemessen, damit sich die betreffenden Spannklaue in ausreichendem Maß in radialer Richtung verschwenken kann.

Der Klauenabschnitt 26 ist gegenüber dem Mittelabschnitt 24 verdickt ausgebildet und er steht mit einer Keilfläche 36 radial nach außen vom Mittelabschnitt 24 vor. Mit dieser Keilfläche ist der Klauenabschnitt 26 in eine hinterschnittene bzw. hinterdrehte Innenausnehmung 38 schwenkbar, bis sich die Keilfläche satt und mit zunehmender Kontaktkraft gegen eine Übergangsfläche 40 anlegt. Die dabei auftretenden Normalkräfte zwischen den Kontaktflächen haben eine erhebliche Komponente in axialer Richtung, wodurch die Spannklauen unter Zug gesetzt und die beiden Teile 2 und 4 gegeneinander gepreßt werden. Im Bereich des Ankerabschnitts liegt vorzugsweise ein Linienkontakt zur Flanke 32 vor, so daß sich eine möglichst geringe Biegebeanspruchung der Spannklauen ergibt.

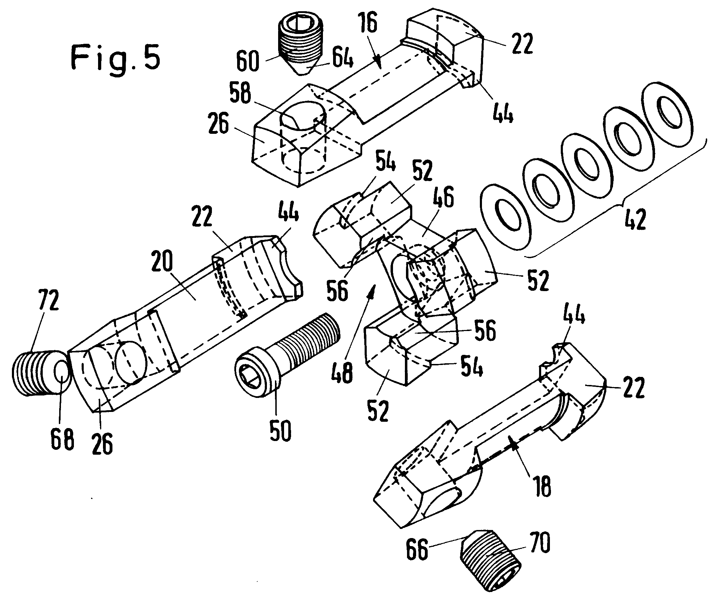

Die Spannklauen werden ständig so vorgespannt, daß die Klauenabschnitte 26 in radialer Richtung nach innen gedrückt sind. Hierzu dient eine axial wirkende Federeinrichtung in Form eines Tellerfederpakets 42, das sich einerseits an radial nach innen vorstehenden Endabschnitten 44 und andererseits an einem aufnahmefesten Teil abstützt. Dieses aufnahmefeste Teil ist bei der gezeigten Ausführungsform von einer Druckplatte 46 eines Führungsteils 48 -Fig.5- gebildet, das mittels einer zentralen Schraube 50 am Trägerteil 2 festgelegt ist. Das Führungsteil 48 hat drei Führungskörper 52, die in einer Axial-Passungsnut der Aufnahme 12 aufgenommen und über eine Radialschulter 54 axial in Lage gehalten sind. Mit 56 sind Führungs-Gleitflächen für die jeweiligen Spannklauen bezeichnet.

Man erkennt aus der Darstellung gemäß Fig. 2, daß die radial innenliegenden Flächen der Klauenabschnitte 26 derart gestaltet sind, daß die Spannklauen unter Einwirkung des Federpakets weit genug nach innen schwenken können, um die Keilfläche 36 an eine Stelle zu verlegen, die sich radial innerhalb des Randpunktes 57 der Übergangsfläche befindet. In dieser Stellung der Spannklauen ist die Kupplung gelöst.

Um die zu kuppelnden Teile gegeneinander zu pressen sind folgende Maßnahmen getroffen: Eine der Spannklauenbeim Ausführungsbeispiel die Spannklaue 16 weist eine im wesentlichen radial verlaufende Durchgangsgewindebohrung 58 auf, die eine Stellschraube 60 aufnimmt. Wenn die beiden Teile in der richtigen Drehlage zusammengefügt sind, kommt mit der Gewindebohrung 58 ein Radiadurchbruch 62 in Fluchtung, durch den ein Werkzeug zur Betätigung der Stellschraube einführbar ist.

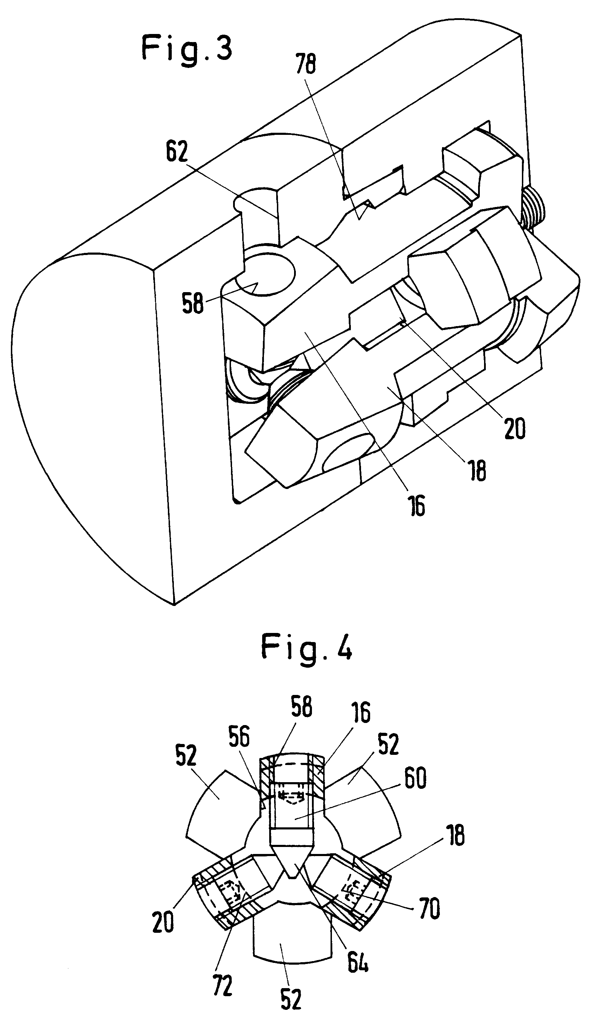

Die Stellschraube 60 hat an ihrem radial inneren Ende eine Kegelfläche 64, die mit Kegelstupfflächen 66 und 68 von Madenschrauben 70 und 72 zusammenwirkt, was im einzelnen in Fig.4 gezeigt ist, in der die Spannklauen nach außen verschwenkt sind. Wenn die Stellschraube 60 nach innen gedreht wird, werden sämtliche Spannklauen gegen die Kraft des Tellerfederpakets 42 gleichmäßig nach außen geschwenkt und mit den Keilflächen 36 gegen die Übergangsflächen gepreßt. Zum Lösen der Kupplung wird die Stellschraube 60 nach außen gedreht, wodurch sich die Klauenabschnitte 26 Unter Einwirkung der Rückstellkraft der Federeinrichtung 42 einander nähern. Die Spannklauen werden dabei entlang der Führungsflächen 56 geführt, so daß ein Verkanten der Kupplungselemente vermieden wird.

Weil die mit der Stellschraube 60 zusammenwirkenden Kontaktabschnitte im Bereich der beiden anderen Spannklauen von einstellbaren Schrauben gebildet sind, kann eine Feinjustierung der Kegelstumpfflächen 66 und 68 vorgenommen werden.

Die Führungskörper 52 erfüllen in vorteilhafter Weise eine zusätzliche Funktion. Sie wirken als Mitnehmereinrichtung und Drehlage-Positioniereinrichtung, indem sie mit ihren der Schnittstelle zugewandten Endabschnitten in stirnseitige Ausnehmungen 74 -Fig.1- des Zentrierfortsatzes 10 mit Passung eingreifen. Die Kupplung eignet sich somit auch für Bauteile, die eine definierte Drehlagepositionierung zum Trägerteil einhalten müssen.

Die Kontaktflächen zwischen den Schrauben 60, 70 und 72 sind vorzugsweise gehärtet ausgeführt, um die Lebensdauer anzuheben. Mit 76 ist eine weitere ringnutartige Ausnehmung im Bereich des Zentrierfortsatzes 10 bezeichnet, die ebenfalls eine konische Übergangsfläche 78 aufweist, die sich radial innerhalb des zylindrischen oder konischen Zentrierfortsatzes 10 befindet. Die Neigung der Übergangsfläche 78 ist an die Gestaltung einer nicht näher gezeigten Keilfläche eines Klauenabschnitts angepaßt, der einer Spannklaue angehört, die im aufnahmeseitigen Bereich in gleicher Weise wie die vorstehend beschriebene Spannklaue ausgebildet ist, die jedoch in axialer Richtung über den Klauenabschnitt hinaus verlängert ist, um im Bereich der Innenausnehmung 38 die Gewindebohrung 58 für die Stellschraube 60 und die Kontaktabschnitte im radial innenliegenden Bereich auszubilden.

Es ist ersichtlich, daß es mit dieser Variante gelingt, die zwischen dem Klauenabschnitt und der Übergangsfläche 78 wirkenden Kontaktkräfte und damit auch die Anpresskräfte der beiden Bauteile im wesentlichen entsprechend dem Hebelarmverhältnis A:B - siehe Fig. 1 - anzuheben. Die Lager der Übergangsfläche 78 radial innerhalb des Zentrierfortsatzes 10 hat darüber hinaus den Vorteil, daß durch die Einwirkung der nach außen gespannten Spannklauen gleichzeitig eine radiale Aufweitung des Zentrierfortsatzes 10 erfolgt, wodurch toleranzbedingte Konusabweichungen kompensiert werden können. Es ist auf diese Weise möglich, die Flächenpaarung im Bereich des Zentrierkonus so zu wählen, daß beim kraftlosen Ansetzen des Bauteils 4 am Trägerteil 2 zunächst nur ein Tragen im größeren Durchmesserbereich des Zentrierfortsatzes erfolgt. Durch die von den Spannklauen ausgeübten radial nach außen gerichteten Kraftkomponenten legt sich schließlich bei festgezogener Spanneinrichtung die gesamte Konusfläche des Zentrierfortsatzes 10 gegen die Innenausnehmung im Trägerteil 2 an. Ein ähnlicher Effekt tritt auf, wenn anstatt eines Zentrierkonus ein Zentrierzylinder vorgesehen wird, der dann über die Spannklauen unter Aufweitung radial von innen gegen die zylindrische Innenausnehmung im Trägerteil 2 gegreßt werden kann.

Die in den Fig. 1 bis 5 gezeigte Ausführungsform, bei der das oben angesprochene Kraftübersetzungsverhältnis den Wert 1 hat, hat allerdings den Vorteil, daß die Stelleinrichtung in den Klauenabschnitt integriert wird, wodurch sich eine einfachere Gestaltung der Spannklauen und eine axial verkürzte Bauweise ergeben.

Selbstverständlich sind Abweichungen vom gezeigten Ausführungsbeispiel möglich, ohne den Grundgedanken der Erfindung zu verlassen. So ist es beispielsweise nicht unbedingt erforderlich, daß die Stellschraube 60 exakt radial nach innen verläuft. Durch geeignete Neigung der Stellschraubenachse in einer Axialebene zur Mittelachse X der Kupplung kann zusätzlich Einfluß auf die Kraftumsetzung zwischen Stellschraube und Kontaktabschnitten genommen werden.

Anstelle des Tellerfederpakets 42 kann selbstverständlich auch jede andere axial wirkende Federeinrichtung, beispielsweise eine Schraubenfeder, Verwendung finden.

Die Schulter 32 muß auch nicht notwendigerweise integraler Bestandteil des Trägerteils 2 sein. Es kann von Vorteil sein, in diesen Bereich mit Verschleißringen zu arbeiten, die auf das Material des Ankerabschnitts 22 abgestimmt bzw. als Verschleißteile auswechselbar gestaltet sind.

Schließlich können auch die Kontaktabschnitte der Spannklauen, mit denen die Stellschraube zusammenwirkt, von anderen Komponenten gebildet sein. Sie können beispielsweise integraler Bestandteil des Klauenabschnitts selbst bzw. der Spannklaue sein.

Auch im Bereich der Zentrierpassung zwischen Bauteil 4 und Trägerteil 2 kann es von Vorteil sein, mit Verschleißringen zu arbeiten. Ein derartiger Verschleißring sitzt bevorzugterweise am Trägerteil 2 und bildet die Radial- und die zylindrische oder konische Passungsfläche aus, was im einzelnen auch in der DE 38 07 140 A1 beschrieben ist.

Die Erfindung schafft somit eine Kupplung zur lösbaren dreh- und axialfesten Fixierung von Bauteilen, insbesondere von Werkzeugkomponenten, an entsprechenden Trägerteilen, wie z.B. an einer Werkzeug-Grundaufnahme. Dabei ist am Trägerteil eine Aufnahme für einen konischen oder zylindrischen Zentrierfortsatz des Bauteils vorgesehen. Von der Außenseite des Bauteils ist mittels einer Stellschraube eine Spanneinrichtung betätigbar, um die beiden Teile über eine Stützringflächenpaarung gegeneinander zu pressen. Zur Bereitstellung einer leichten Bedienbarkeit , eines günstigen Kraftflusses zwischen den Teilen und einer Kompatibilität mit bereits vorliegenden Kupplungssystemen mit zentral angeordneter Zugstange weist die Spanneinrichtung drei im Umfangsabstand zueinander stehende klammerartige Spannklauen auf, die jeweils i.W. in einer Axialebene der Kupplung liegend angeordnet sind. Die Spannklauen stützen sich mit einem Ankerabschnitt an einer Schulter in der Aufnahme ab und sind mit einem radial nach außen vorstehenden Klammerabschnitt in eine hinterdrehte Innenausnehmung schwenkbar. Hierzu wird die Stellschraube in eine der Spannklauen geschraubt, so daß sie sich mit ihrem radial innenliegenden Druckkopf gleichmäßig gegen Kontaktabschnitte der beiden anderen Spannklauen anlegt.

## Patentansprüche

1. Kupplung zur lösbaren dreh- und axialfesten Fixierung von Bauteilen, insbesondere von Werkzeugkomponenten an hierfür vorgesehenen Trägerteilen, mit einer am Trägerteil (2) vorgesehenen Aufnahme für einen Zentrierfortsatz (10) des anzukuppelnden Bauteils (4) und einer mittels einer Stelleinrichtung betätigbaren Spanneinrichtung, mit der die zu kuppelnden Teile über eine Stützringflächenpaarung gegeneinander pressbar sind, wobei die Spanneinrichtung mehrere, im Umfangsabstand zueinander stehende, klammerartige Spannklauen (26, 28, 30) aufweist, die jeweils im wesentlichen in einer Axialebene des Zentrierfortsatzes (10) liegend angeordnet sind, sich mit einem Ankerabschnitt (30) an einer Schulter (32) in der Aufnahme abstützen und mit einem radial nach außen vorstehenden Klauenabschnitt (26) in eine hinterschnittene Innenausnehmung des Bauteils (4) schwenkbar sind, dadurch gekennzeichnet, daß die Stelleinrichtung von einer von der Außenseite des Bauteils betätigbaren und in einer Axialebene des Zentrierfortsatzes liegenden Stellschraube (60) gebildet ist, die in einer Gewindebohrung (58) des Klauenabschnitts (26) aufgenommen ist, und daß die Klauenabschnitte (26) in die hinterschnittene Innenausnehmung (38; 76) bewegbar sind, indem die Stellschraube (60) in eine der Spannklauen (16) geschraubt und mit ihren radial innenliegenden Druckkopf (64) gleichmäßig gegen Kontaktabschnitte (66, 68) zweier weiterer Spannklauen (18, 20) gedrückt wird.

2. Kupplung nach Anspruch 1, dadurch gekennzeichnet, daß die Stellschraube (60) in einer Durchgangsgewindebohrung (58) des Klauenabschnitts (26) aufgenommen ist.

3. Kupplung nach Anspruch 1 oder 2, dadurch gekennzeichnet, daß die Kontaktabschnitte der Spannklauen (18,20) von Kopfabschnitten (66,68) von in die Spannklauen (18,20) geschraubten Madenschrauben (70,72) gebildet sind.

4. Kupplung nach Anspruch 3, dadurch gekennzeichnet, daß die Kopfabschnitte von Kegelstumpfflächen (66,68) gebildet sind, die mit einer Kegelmantelfläche (64) der Stellschraube (60) in Anlagekontakt bringbar sind.

5. Kupplung nach einem der Ansprüche 1 bis 4, dadurch gekennzeichnet, daß in der Aufnahme (12) eine Federeinrichtung (42) vorgesehen ist, mit der die Klauenabschnitte (26) radial nach innen vorgespannt sind.

6. Kupplung nach Anspruch 5, dadurch gekennzeichnet, daß die Federeinrichtung von einem Tellerfederpaket (42) gebildet ist, das sich einerseits über eine Druckscheibe (46) am Trägerteil (2) und andererseits an radial nach innen vorstehenden Endabschnitten (44) der Ankerabschnitte (22) abstützt.

7. Kupplung nach einem der Ansprüche 1 bis 6, dadurch gekennzeichnet, daß die Ankerabschnitte (22) in eine ringförmige Stütznut (30,32) der Aufnahme (12) eingreifen.

8. Kupplung nach einem der Ansprüche 1 bis 7, dadurch gekennzeichnet, daß die hinterschnittene Innenausnehmung (38; 76) im Bauteil (4) von einer umlaufenden Freidrehung mit einer konischen Übergangsfläche (40; 78) gebildet ist.

9. Kupplung nach Anspruch 8, dadurch gekennzeichnet, daß sich die Klauenabschnitte (26) im gekuppelten Zustand der Teile flächig gegen die Übergangsfläche (40; 78) anlegen.

10. Kupplung nach einem der Ansprüche 7 bis 9, dadurch gekennzeichnet, daß sich die Ankerabschnitte (22) im gekuppelten Zustand der Teile mit Linienkontakt an einer Flanke (32) der Stütznut (30,32) anlegen.

11. Kupplung nach einem der Ansprüche 1 bis 10, dadurch gekennzeichnet, daß zwischen den Spannklauen (16,18,20) Führungskörper (52) angeordnet sind, über die die Spannklauen seitlich geführt sind.

12. Kupplung nach Anspruch 11, dadurch gekennzeichnet, daß die Führungskörper (52) in einer Axialnut der Aufnahme (12) eingepaßt sind und sich mit einer Radialschulter (54) in axialer Richtung an der Aufnahme abstützen.

13. Kupplung nach Anspruch 11 oder 12, dadurch gekennzeichnet, daß zumindest einer der Führungskörper (52) als Drehmitnehmer für das anzukuppelnde Bauteil (4) dient.

14. Kupplung nach Anspruch 13, dadurch gekennzeichnet, daß in der Stirnfläche des Zentrierfortsatzes (10) zumindest eine Ausnehmung (70) für den Passungseingriff mit dem Führungskörper (52) vorgesehen ist.

15. Kupplung nach einem der Ansprüche 11 bis 14, dadurch gekennzeichnet, daß die Führungskörper (52) mit einer gemeinsamen Trägerplatte (46) verbunden sind, die mittels einer zentrisch angeordneten Schraube (50) im Grund der Aufnahme (12) verankert ist und die Druckscheibe für die Federeinrichtung (42) bildet.

16. Kupplung nach einem der Ansprüche 1 bis 15, dadurch gekennzeichnet, daß das Trägerteil Bestandteil einer Werkzeug- Grundaufnahme ist.

17. Kupplung nach einem der Ansprüche 1 bis 15, dadurch gekennzeichnet, daß das Trägerteil eine Werkzeugschaft-Verlängerung ist, die an ihrem einen, dem Werkzeug zugewandten Ende, die Aufnahme und an ihrem anderen Ende einen Zentrierfortsatz für eine Angrenzende Kupplung ausbildet.

18. Kupplung nach einem der Ansprüche 1 bis 15, dadurch gekennzeichnet, daß das Trägerteil Bestandteil von einem Werkzeugträger, wie z. B. einem Drehrevolver gebildet ist.

19. Kupplung nach einem der Ansprüche 1 bis 15, dadurch gekennzeichnet, daß das Trägerteil Bestandteil einer sich drehenden Maschinenspindel ist.

20. Kupplung nach einem der Ansprüche 1 bis 19, dadurch gekennzeichnet, daß das anzukuppelnde Bauteil von einem drehenden oder stehenden Werkzeug gebildet ist.

## Claims

1. Attachment for a detachable, rotatingly and axially rigid fixation of construction elements, in particular of tool components on carrier elements provided herefor, having on its carrier element (2) a seat for a centering extension (10) of the construction element (4) to be mounted and a clamping device operable by means of a locking means whereby the elements to be mounted are pressable against each other via a couple of support ring surfaces, with said clamping device comprising several clamping claws (26, 28, 30) of the clasp type at a peripheral distance from each other, each of which is positioned to lie essentially within an axial plane of said centering extension (10), being supported on a shoulder (32) inside said seat by means of an anchoring portion (30), and comprising a claw portion protruding outwardly in a radial direction which is pivotable such as to enter into an undercut inner recess of said constructional element (4),
characterized in that
said locking means is constituted by a locking screw (60) arranged inside an axial plane of said centering extension and operable from the outside of said construction element, which is received in a tapped hole (58) of said claw portion (26), and in that said claw portions (26) are movable into said undercut inner recess (38; 76) by screwing said locking screw (60) into one of said clamping claws (16) and thereby uniformly pressing its pressure head (64), which is positioned on the inside in a radial direction, against contact portions (66, 68) of two further clamping claws (18, 20).

2. Attachment according to claim 1, characterized in that said locking screw (60) is received in a tapped through hole (58) of said claw portion (26).

3. Attachment according to claim 1 or 2, characterized in that said contact portions of said clamping claws (18, 20) are constituted by head portions (66, 68) of grub screws (70, 72) screwed into said clamping claws (18, 20).

4. Attachment according to claim 3, characterized in that said head portions are constituted by surfaces (66, 68) in the shape of truncated cones, which are capable of being brought into contact with a surface of said locking screw (60) in the shape of a cone envelope .

5. Attachment according to any one of claims 1 through 4, characterized in that inside said seat (12), a spring device (42) is provided whereby said claw portions (26) are radially pretensioned toward the inside.

6. Attachment according to claim 5, characterized in that said spring device is formed by a set of dish springs (42) supported firstly on said carrier element (2) by a thrust washer (46), and secondly on end portions (44) of said anchoring portions (22) radially protruding toward the inside.

7. Attachment according to any one of claims 1 through 6, characterized in that said anchoring portions (22) are engaged in an annual support groove (30, 32) of said seat (12).

8. Attachment according to any one of claims 1 through 7, characterized in that said undercut inner recess (38; 76) in said constructional element (4) is formed by a circular recess having a conical transitional surface (40; 78).

9. Attachment according to claim 8, characterized in that said claw portions (26) enter into surface contact with said transitional surface (40; 78) when said elements are in a coupled state.

10. Attachment according to any one of claims 7 through 9, characterized in that said anchoring portions (22) enter into linear contact with one flank (32) of said support groove (30, 32) when said elements are in a coupled state.

11. Attachment according to any one of claims 1 through 10, characterized in that guiding bodies (52) for laterally guiding said clamping claws (16, 18, 20) are positioned between said clamping claws.

12. Attachment according to claim 11, characterized in that said guiding bodies (52) are fitted into an axial groove of said seat (12), and one radial shoulder (54) thereof is supported on said seat in an axial direction.

13. Attachment according to claim 11 or 12, characterized in that at least one of said guiding bodies (52) serves as a drive key for said constructional element (4) to be coupled.

14. Attachment according to claim 13, characterized in that in the end surface of said centering extension (10), at least one recess (70) is provided for close-fitting engagement with said guiding body (52).

15. Attachment according to any one of claims 11 through 14, characterized in that said guiding bodies (52) are connected with a common carrier plate (46) which is anchored in the base of said seat (12) by means of a center bolt (50) and which forms the thrust washer for said spring device (42).

16. Attachment according to any one of claims 1 through 15, characterized in that said carrier element constitutes a component of a tool holding fixture.

17. Attachment according to any one of claims 1 through 15, characterized in that said carrier element constitues a tool shaft extension which forms the recess at its one side adjacent to the tool and which forms a centering extension for an adjacent attachment at its other end.

18. Attachment according to any one of claims 1 through 15, characterized in that said carrier element is formed as an element of a tool carrier, such as of a revolving turret.

19. Attachment according to any one of claims 1 through 15, characterized in that said carrier element constitutes an element of a rotating tool spindle.

20. Attachment according to any one of claims 1 through 19, characterized in that the element to be coupled is constituted by a rotating or a stationary tool.

## Revendications

1. Accouplement pour la fixation détachable de composants fixes dans le sens de la rotation et dans le sens axial, notamment de composants d'outils à des pièces portantes prévues à cet effet, avec un logement pour une projection de centrage (10) prévu sur la pièce portante (2) du composant à accoupler (4) et un dispositif de serrage pouvant être actionné par un dispositif de réglage, moyennant lequel les pièces à accoupler peuvent être pressées l'une contre l'autre par l'accouplement des surfaces des couronnes d'appui, le dispositif de serrage présentant plusieurs crabots de serrage (26, 28, 30) à la manière d'agrafes, qui sont placés réciproquement à distance sur la circonférence et disposés substantiellement dans un plan axial de la projection de centrage (10), s'appuient contre un épaulement (32) dans le logement moyennant une section d'ancrage (30) et peuvent pivoter moyennant une section de crabot (26) radialement en saillie vers l'extérieur dans une échancrure intérieure en contredépouille du composant (4), caractérisé en ce que le dispositif de serrage est formé par une vis de réglage (60) pouvant être actionnée à partir de la face extérieure du composant et se trouvant dans un plan axial de la projection de centrage, qui est reçue dans un perçage fileté (58) de la section de crabot (26), et que les sections de crabots (26) peuvent être déplacées dans l'échancrure intérieure (32, 76) en contredépouille par le vissage de la vis de réglage (60) dans l'un des crabots de serrage (16) et sa pression régulière moyennant sa tête-poussoir (64) se trouvant à l'intérieur contre les sections de contact (66, 68) de deux autres crabots de serrage (18, 20).

2. Accouplement selon la revendication 1, caractérisé en ce que la vis de réglage (60) est reçue dans un perçage fileté intermédiaire (58) de la section de crabot (26).

3. Accouplement selon les revendications 1 ou 2, caractérisé en ce que les sections de contact des crabots de serrage (18, 20) sont formées par les sections avant (66, 68) de vis sans tête (70, 72) vissées dans les crabots de serrage (18, 20).

4. Accouplement selon la revendication 3, caractérisé en ce que les sections avant sont formées par des surfaces tronconiques (66, 68) qui peuvent être mises en contact par une aire latérale conique (64) de la vis de serrage (60).

5. Accouplement selon l'une des revendica-tions 1 à 4, caractérisé en ce que, dans le logement (12), est prévu un dispositif à ressort (42) au moyen duquel les sections de crabots (26) sont précontraintes radialement vers l'intérieur.

6. Accouplement selon la revendication 5, caractérisé en ce que le dispositif à ressort est formé par un ensemble de ressorts Belleville qui s'appuient d'une part par l'intermédiaire d'une rondelle de pression (46) contre la pièce portante (2) et d'autre part contre les extrémités (44) des sections d'ancrage (22) qui sont radialement en saillie vers l'intérieur.

7. Accouplement selon l'une des revendications 1 à 6, caractérisé en ce que les sections d'ancrage (22) s'engagent dans une rainure d'appui annulaire (30, 32) du logement (12).

8. Accouplement selon l'une des revendications 1 à 7, caractérisé en ce que l'échancrure intérieure en contredépouille (38 ; 76) dans le composant (4) est formée par une pièce à rotation libre sur tout le pourtour avec une surface de transition conique (40 ; 78).

9. Accouplement selon la revendication 8, caractérisé en ce que les sections de crabots (26), à l'état accouplé des pièces, reposent avec toute leur surface contre la surface de transition (40 ; 78).

10. Accouplement selon l'une des revendications 7 à 9, caractérisé en ce que les sections d'ancrage, à l'état accouplé des pièces, reposent par contact linéaire contre un flanc (32) de la rainure d'appui (30, 32).

11. Accouplement selon l'une des revendications 1 à 10, caractérisé en ce qu'entre les crabots de serrage (16, 18, 20) des corps de guidage (52) sont disposés, moyennant lesquels les crabots de serrage sont guidés latéralement.

12. Accouplement selon la revendication 11, caractérisé en ce que les corps de guidage (52) sont ajustés dans une rainure axiale du logement (12) et s'appuient contre celui-ci en direction axiale moyennant un épaulement radial (54).

13. Accouplement selon les revendications 11 ou 12, caractérisé en qu'au moins un corps de guidage (52) sert des pièces d'entraînement rotatives pour la pièce à accoupler (4).

14. Accouplement selon la revendication 13, caractérisé en ce que sur la face frontale de la projection de centrage (10) est prévue au moins une échancrure (70) pour l'engagement ajusté avec le corps de guidage (52).

15. Accouplement selon l'une des revendications 11 à 14, caractérisé en ce que les corps de guidage (52) sont reliés à une plaque portante (46) commune qui est ancrée dans le fond du logement (12) au moyen d'une vis (50) à disposition centrale et qui forme la rondelle de pression pour le dispositif à ressort (42).

16. Accouplement selon l'une des revendications 1 à 15, caractérisé en ce que la pièce portante est une partie intégrante d'une base d'appui de l'outil.

17. Accouplement selon l'une des revendications 1 à 15, caractérisé en ce que la pièce portante est une projection de centrage de la tige d'un outil qui, à l'une de ses extrémités tournée vers l'outil, est formée pour la réception et, à son autre extrémité, forme une projection de centrage pour un accouplement voisin.

18. Accouplement selon l'une des revendications 1 à 15, caractérisé en ce que la pièce portante est formée comme partie intégrante d'un support d'outil, comme par exemple d'un revolver rotatif.

19. Accouplement selon l'une des revendications 1 à 15, caractérisé en ce que la pièce portante est une partie intégrante d'une broche de machine tournante.

20. Accouplement selon l'une des revendications 1 à 19, caractérisé en ce que le composant à accoupler est formé par un outil tournant ou immobile.
